(19) Europäisches Patentamt
European Patent Office
Office européen des brevets

(11) **EP 2 543 423 B1**

(12) **EUROPÄISCHE PATENTSCHRIFT**

(45) Veröffentlichungstag und Bekanntmachung des Hinweises auf die Patenterteilung:
**20.05.2015  Patentblatt 2015/21**

(51) Int Cl.:
***B01D 39/08*** *(2006.01)*  ***B01D 39/16*** *(2006.01)*

(21) Anmeldenummer: **12001822.1**

(22) Anmeldetag: **13.03.2012**

(54) **Plissierter Filter**

Pleated filter

Filtre plissé

(84) Benannte Vertragsstaaten:
**DE IT PL**

(30) Priorität: **16.03.2011  DE 102011014202**

(43) Veröffentlichungstag der Anmeldung:
**09.01.2013  Patentblatt 2013/02**

(73) Patentinhaber: **Sandler AG**
**95126 Schwarzenbach/Saale (DE)**

(72) Erfinder:
• **Der Erfinder hat auf seine Nennung verzichtet.**

(56) Entgegenhaltungen:
**WO-A1-99/16532        US-A1- 2008 022 642**
**US-A1- 2011 011 043**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Plissierte Filter können aus einer Reihe von Ausgangsmaterialien hergestellt werden.

Beispielsweise kommen Medien aus Papier zum Einsatz. Diese Medien lassen sich einfach und ohne großen maschinellen Aufwand falten. Allerdings reichen bereits geringste Anteile an Wasser oder Feuchte aus, die Faltenstabilität unbehandelter Papiere bis hin zum Zusammenbruch der Filter zu verringern, aggressive Stoffe in den zu filternden Medien die Beständigkeit der Falten im Gebrauch kann aber nur durch Einsatz chemischer Bindemittel erreicht werden. Werden derartige Papiere zur Erhöhung der Stabilität ausgerüstet, können diese aufgrund der eingebrachten Chemikalien nicht mehr recycelt werden.

Mit Filtermedien aus Spinnvliesen oder schmelzgeblasenen Vliesstoffen, sogenannten Meltblowns lassen sich ebenfalls plissierte Filtermedien herstellen. In der Praxis zeigt sich allerdings, dass die Falten nicht stabil sind und bereits kurz nach dem Faltprozess die Faltenstruktur wieder verlorengeht. Nur durch Einsatz aufwendiger Wärmebehandlungseinrichtungen kann dieses Verhalten beeinflusst werden. Die Filtermedien müssen vor dem eigentlichen Faltprozess auf eine Temperatur oberhalb des Glaspunktes erwärmt werden, sodass die Faltenstruktur nach Ende des Faltvorgangs erhalten bleibt. Die zur Anwendung kommende Wärmebehandlung limitiert allerdings die erreichbaren Fertigungsgeschwindigkeiten und muss auch den jeweils zum Einsatz kommenden Ausgangsrohstoffen wie PET oder PP angepasst werden.

Das Dokument WO 99/16532 A1 beschreibt ein Filtervlies, das aus thermoplastischem, extrudiertem Polypropylen besteht, welches eine geringe Kristallinität aufweist.

Aufgabe der Erfindung war es daher, ein Filter bereitzustellen, welches die vorgenannten Nachteile des Standes der Technik vermeidet. Die Aufgabe wird anhand der Merkmale des Anspruches 1 gelöst, sinnvolle Ausgestaltungen sind in den Ansprüchen 2 bis 13 beschreiben. Die Anwendung eines erfindungsgemäßen Produkts ist in den Ansprüchen 14 und 15 beschrieben.

Werden dem Stand der Technik entsprechende Filtermedien aus thermoplastischen Polymeren einer Falt- oder Plissierbehandlung unterzogen, so verliert sich die eingebrachte Faltenstruktur bereits nach kurzer Zeit fast vollständig. Dieses Verhalten kann messtechnisch durch den sogenannten Knittererholungswinkel erfasst werden.

Zur Ermittlung des Knittererholungswinkels wird ein Streifen des untersuchenden Materials in den Abmessungen 200mm * 50mm zugeschnitten. Dabei ist die längere Seite in der Laufrichtung des späteren Faltprozesses, d.h. in Richtung der späteren Falten, die Schmalseite quer zur Laufrichtung im Faltprozess, d.h. quer zu den späteren Falten zu wählen. Auf der langen Seite wird nun eine Markierung im Abstand von 40mm zu einer der Schnittkanten eingezeichnet, der 50mm breite und 40mm lange Streifen an dieser Markierung um 180° umgeschlagen, sodass der der Streifen auf dem Restmusterstück zu liegen kommt. Anschließend wird der Versuchsaufbau 60 Minuten mit einem Gewicht von zwei Kilogramm belastet.

Am Ende der Belastungszeit wird das Gewicht entfernt und der umgeschlagene Teil kann sich zurück in seine ursprüngliche Position stellen. Nach weiteren 60 Minuten wird der Winkel der bis dahin erreichten Rückstellung zwischen dem Restmusterteil und dem umgeklappten Musterteil in Grad ermittelt, wobei einem Winkel von 0° einer Berührung der beiden Musterteile und 180° einem ebenen Verlauf ohne erkennbare Faltung entsprechen.

Dem Stand der Technik entsprechende Materialien zeigen dabei Knitterholungswinkel im Bereich von 105 bis 180 °. Werden derartige Materialien in einer Faltmaschine, beispielsweise einer Rotations- oder einer Messerfaltanlage einer Z- Faltung mit Faltenhöhe bis 80 mm unterzogen, so sind die so eingebrachten Falten nicht formbeständig, bei der weiteren Verarbeitung öffnen sich die Falten sehr schnell wieder, sodass die Fixierung in einem Einbau-Rahmen mit vorgegebener Faltenhöhe und Faltenanzahl, aus beidem ergibt sich unter Einbeziehung der Mediumbreite die effektive Filterfläche, schwierig ist.

Grund dafür ist die Kristallinität der Fasern und / oder Filamente, welche die Filtermedien bilden.

Die Faser und / oder Filamente werden aus thermoplastischen Polymeren wie beispielsweise Polyethylenterephthalat (PET) oder Polypropylen (PP) hergestellt.

Dabei wird zumeist nach einem Extrusionsverfahren gearbeitet, d.h. heiße, flüssige Polymerschmelze wird durch Spinndüsen gedrückt, welche nach dem Abkühlen als Filament oder Faser vorliegt, welche dann zu einem Vlies abgelegt werden.

Die Abkühlung erfolgt gemäß dem Stand der Technik so, dass dem Polymer Zeit gegeben wird zu kristallisieren, d.h. die einzelnen Polymerketten räumlich geordnet vorliegen. Je besser die Kristallisation ist, umso höher sind beispielsweise Festigkeiten oder auch Rückstellkräfte.

Der Erfindung liegt daher die Idee zugrunde ein aus Faser und / oder Filamenten bestehendes, flächiges Filtermedium herzustellen, was aus thermoplastischen Polymeren besteht und nur wenige kristalline Bereiche enthält. Durch diese Maßnahme wird die unter anderem die Neigung, einer Verformung entgegenzuwirken, entscheidet beeinflusst. Daher weisen erfindungsgemäß ausgeführte Produkte einen Knittererholungswinkel von kleiner 90° auf. Je geringer der Anteil an kristallinen Bereichen im Polymer und damit im erfindungsgemäßen Filtermedium ist, umso geringer ist auch der Knittererholungswinkel. Der Knittererholungswinkel ist, genau wie der Anteil kristalliner Bereiche, durch die Wahl der Parameter bei Abkühlung der Polymerschmelze nach dem Austritt aus der Spinndüse beeinflussbar.

Durch die Herstellung von Fasern und/ oder Filamenten mit geringem Anteil an kristallinen Bereichen ist es möglich, die Rückstellneigung zu reduzieren. Die Rückstellneigung wird im Sinne dieser Erfindung durch die Messgröße Knittererholungswinkel gemäß den vorstehenden Ausführungen ermittelt.

Weist nun ein Filtermedium wenig kristalline Bereiche auf, erfindungsgemäß weniger als 50%, so auch nimmt der Knittererholungswinkel ab, was bedeutet, das eingebrachte Falten im einem nach Herstellung plissierten Medium stabil verbleiben. Der Anteil kristalliner Bereiche im Filtermedium bzw. in dem das Filtermedium bildenden Polymer ist neben zum Teil technisch sehr aufwendiger Methoden wie beispielsweise der Kernresonanzspektroskopie oder auch Röntgenbeugung am einfachsten über die dynamische Differenzkalorimetrie, kurz DDK-Analyse möglich.

Bei diesem Verfahren wird eine bestimmte Probenmenge in einen Aluminiumbehälter, auch Tiegel genannt, eingebracht, der Tiegel verschlossen und in die Messkammer eines DDK-Geräts auf einen dort befindlichen Temperatursensor gestellt. Ein zweiter, identisch aufgebauter Tiegel wird ohne Probe als Referenztiegel ebenfalls in die Messkammer auf einen dort befindlichen zweiten Sensor gesetzt. Beide Tiegel werden zusammen dem gleichem Temperaturprogramm, einer kontinuierlichen Erwärmung, ausgesetzt. Dabei kommt es infolge der Wärmekapazität der Probe zu exothermen oder endothermen Prozessen bspw. Phasenänderungen wie Schmelzen oder Verdampfen und auch zu der hier relevanten Änderung des Anteils an kristallinen Bereichen. Alle diese Vorgänge führen zu Temperaturänderungen des Tiegels mit der Probe im Vergleich zum leeren Tiegel ohne Probe, da thermische Energie in den oder aus dem entsprechenden Prozess fließt.

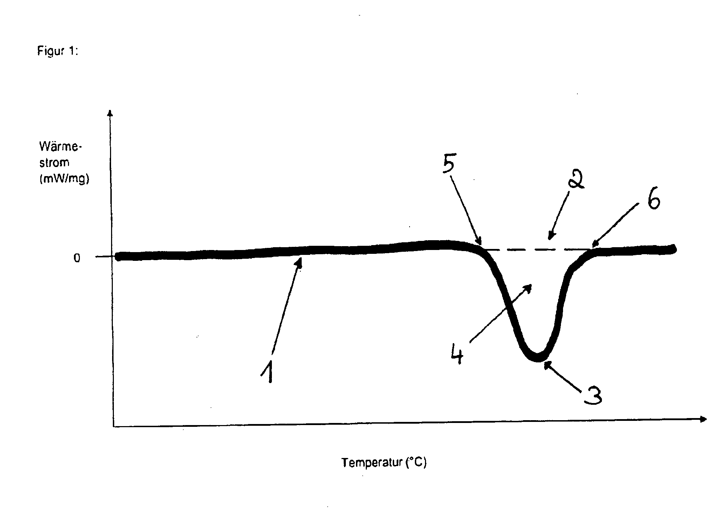

Messtechnisch erfasst wird der Wärmestrom bezogen auf die Probenmasse in der Einheit mW/mg. Eine prinzipielle Kurve einer DDK-Analyse ist der Figur 1 zu entnehmen. In der Figur 1 ist als X-Achse die Temperatur in °C innerhalb der Probenkammer aufgetragen. Als Y-Achse ist die Energie als Wärmestrom aufgetragen, die zum Ändern des Zustands "fest" nach "geschmolzen" notwendig ist, die Einheit dafür ist mW/mg.

Zur Auswertung dieser Temperaturänderungen und Umrechnung in Enthalpiewerte, ausgedrückt in der Einheit J/g wird die Methode der dynamischen Wärmestromdifferenzkalorimetrie verwendet. Bei dieser Methode werden die Enthalpieänderungen (Wärmestrom) durch Integration der $\Delta T$- $T_{Ref}$-Kurve berechnet. Dabei befinden sich Stellflächen für Probe und Referenz auf der Bodenplatte innerhalb der Messkammer des DDK-Geräts. Die Bodenplatte besteht aus gut wärmeleitfähigem Material, unterhalb der Stellflächen für Probe und Referenz ist jeweils ein Temperaturfühler angebracht. Wird die Messkammer erhitzt, so fließt die Wärme durch die Probe/Referenz in die Bodenplatte und wird dort mittels der Fühler abgenommen. Sind Probe und Referenz gleich, fließen gleich große Wärmeströme durch die Scheibe. Die Wärmestromdifferenz ist damit null und die Messkurve 1 verläuft als Gerade parallel zu X-Achse. Dieser gerade Verlauf wird Basislinie 2 genannt. Verändert sich während der Messung eine Probe, z. B. durch Umwandlung amorpher in kristalline Bereiche oder umgekehrt, Schmelzen oder Verdampfen, entsteht eine Differenz im Wärmestrom, welche proportional zur Temperaturdifferenz ist.

Dabei sind endotherme Vorgänge, bspw. das Schmelzen einer Probe, durch Energiezufuhr gekennzeichnet und sind in der Grafik der Figur 1 als ein negativer Wert erfasst. Exotherme Vorgänge, d.h. freiwerdende Energie wie beim Nachkristallisieren oder Relaxieren werden als positive Werte erfasst. Verläuft die Messkurve ohne Änderung unterliegt die Probe keinerlei Zustandsänderung.

Für die Durchführung derartiger Untersuchungen und den damit verbundenen Auswertungen ist ein DDK-Gerät zu verwenden. Beispielsweise wurde für die im weiteren Verlauf genannten Daten ein Gerät Typ Phoenix 204 der Firma Netzsch, Selb verwendet. Dieses Gerät arbeitet nach dem Prinzip der dynamischen Wärmestromdifferenzkalorimetrie, für die Auswertung der vom Gerät aufgenommenen Daten kam ein handelsüblicher PC und das von Fa Netzsch vertriebene Programm Proteus in der Version 4.1 zum Einsatz.

Betrachtet man nun die Figur 1, so ist bei steigender Temperatur zunächst keine Differenz der Wärmeströme im Probentiegel gegenüber dem Referenztiegel festzustellen. In der Folge verläuft die Messkurve 1 waagrecht auf der Basislinie 2 ohne Energiezu- oder -abgabe. Bei der Temperatur 5 erkennt man den Beginn einer Energiezufuhr, welche den Beginn des Schmelzens markiert. Die Messkurve 1 läuft in den negativen Bereich ab. Die Energiezufuhr wird verstärkt bis das ganze Probenmaterial im Tiegel geschmolzen ist. Der Temperatur am unteren Umkehrpunkt der Messkurve 1 bezeichnet den Schmelzpunkt 3. Ist der Schmelzvorgang abgeschlossen, findet keine Energiezufuhr mehr statt, die Messkurve 1 läuft wieder zurück auf die Basislinie 2. Das Ende des Schmelzvorganges wird durch die Temperatur 6 gekennzeichnet.

Gemäß dem Buch "Praxis der Thermischen Analyse von Kunststoffen", 2.Auflage, Ehrenstein /Riedel/ Trawiel, erschienen im Hanser-Verlag 2003 wird auf Seite 12 der Anfang des Schmelzbereiches als die Temperatur $T_{im}$ (=5 in Figur 1) definiert, bei welcher die erste nachweisbare Abweichung von der Basislinie in den negativen Bereich erkennbar ist. Als Ende des Schmelzbereiches wird die Temperatur $T_{fm}$ (=6 in Figur 1) definiert, bei welcher am Ende des Schmelzvorgangs die letzte nachweisbare negative Abweichung von der Basislinie 2 erkennbar ist.

Durch geeignete, im Auswerteprogramm Proteus hinterlegte Integrationsverfahren kann man nun die Fläche 4 innerhalb des Schmelzbereiches in der Einheit J/g errechnen. Dieser Bereich beginnt bei der Temperatur $T_{im}$ 5 und endet bei der Temperatur $T_{fm}$ 6. Dieser Bereich ist begrenzt durch die Basislinie 2, welche sich als gerade Verbindungslinie

zwischen den Temperaturen $T_{im}$ 5 und $T_{fm}$ 6 ergibt und durch die Messkurve 1 selbst. Die Größe der Fläche 4 ist ein Maß für den Anteil an kristallinen Bereichen. Je größer die Fläche 4 ist, desto kristalliner ist das Probenmaterial.

Gleiches gilt analog auch für Kaltkristallisationsprozesse. Die Kaltkristallisation findet bei Temperaturen unterhalb des Schmelzbereichs, jedoch oberhalb der Glastemperatur statt. Dabei bilden sich während der Erwärmung kristallinen Bereiche, welche in der Probe aufgrund ihrer thermischen Vorgeschichte zunächst nicht enthalten waren und sich erst während der Analyse ausbilden. Die dabei auftretende Energiefreigabe ist als exothermer Vorgang durch das DDK-Gerät sichtbar.

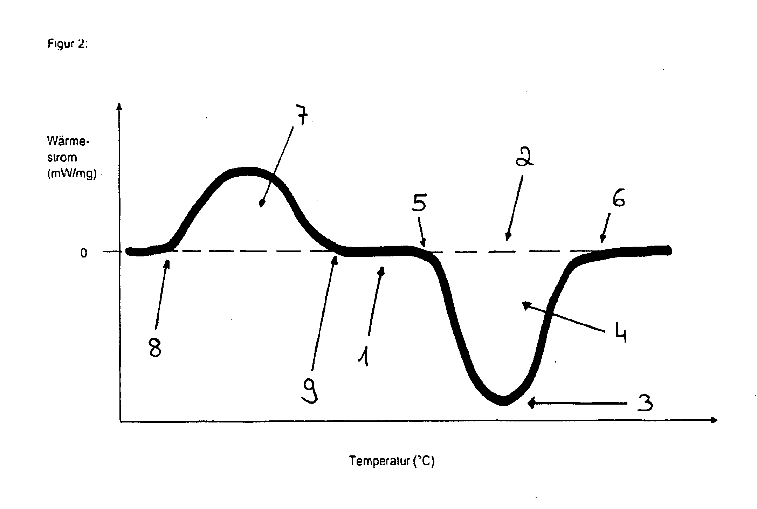

Durch die erhöhte thermische Energie, welche die Polymerketten zu Beginn der Kaltkristallisation besitzen, beginnen sich die amorphen Bereiche zu bewegen. Dabei richten sich diese Bereiche an den vorhandenen, energetisch günstigen Kristallen aus, und es kommt zur Erhöhung der Kristallinität. Diese Kaltkristallisation findet bei Polymeren statt, die ihrer Natur her in der Lage sind, kristalline Bereiche auszubilden, aber durch das gewählte Herstellungsverfahren, genauer gesagt durch die Abkühlung des geschmolzenen Polymers, daran gehindert wurden. Die Kaltkristallisation stellt einen exothermen Prozess dar, wobei gemäß dem Buch "Praxis der Thermischen Analyse von Kunststoffen", Seite 22 der Bereich des Kaltkristallisierens dabei bei der ersten Abweichung von der Basislinie 2 in den positiven Bereich, bei der Temperatur $T_{ic}$ (=8 in Figur 2), beginnt und bei der Temperatur $T_{fc}$ (=9 in Figur 2) mit der letzten nachweisbaren Abweichung von der Basislinie 2 endet. Die Fläche des Bereiches der Kaltkristallisation 7 wird ebenfalls durch Integration bestimmt. Durch die weitere Temperaturerhöhung bei der Analyse werden diese Bereiche bei eigentlichen Schmelzen wieder vom kristallinen in den amorphen Zustand überführt

Zur Bestimmung des erfindungsgemäß beanspruchten Anteils an kristallinen Bereichen in einem Filtermedium wird, bei Wahl der DDK-Analyse zum Nachweis, wie folgt vorgegangen:

Zunächst wird dem Filtermedium eine Probe von ca. 5mg Gewicht entnommen und für die DDK-Analyse wie vorstehend beschrieben in einen Tiegel eingebracht.

Dieser Tiegel wird zusammen mit dem Referenztiegel in die Messkammer des DDK-Geräts eingebracht, die Messkammer geschlossen und dann das TemperaturProgramm gestartet. Die Messkammer und damit auch die Probe werden mit einer konstanten Heizrate von 10K/min beginnend bei einer Starttemperatur von 20°C bis auf die Endtemperatur von 300°C erhitzt.

Das Gerät zeichnet nun alle thermisch relevanten Vorgänge im Probentiegel im Vergleich zum Referenztiegel auf. Neben dem Schmelzpunkt 3, d.h. der Übergang der Polymerketten vom geordneten, kristallinen Zustand in den ungeordneten, amorphen Zustand, ist auch die erfindungsgemäß wichtige Zustandsänderung der sogenannten Kaltkristallisation messbar.

Beide Vorgänge werden durch sich dabei veränderte Wärmeströme im DDK-Gerät sichtbar. Der Schmelzprozess wird durch Energieaufnahme, d.h. Ausschlag der Kurve in den negativen Bereich, die Kaltkristallisation durch Energieabgabe, Ausschlag der Kurve in den positiven Bereich sichtbar, die Figur 2 verdeutlicht dies nochmals.

Hier sieht man zunächst den exothermen Vorgang der Kaltkristallisation, erkennbar als Fläche 7, gefolgt von dem endothermen Vorgang des Schmelzens, erkennbar als Fläche 4.

Aus dem Verhältnis der Fläche der Kaltkristallisation 7 im Vergleich zur Fläche für das Schmelzen 4 kann man im Sinne der Erfindung den Anteil kristalliner Bereiche im Filtermedium nach folgender Formel errechnen:

$$A = \frac{F_{Schmelzen} - F_{Kaltkristallisation}}{F_{Schmelzen}}$$

wobei:

$F_{Schmelzen}$: gleich dem Betrag der Fläche 4 in J/g beim Schmelzvorgang ist
$F_{Kaltkristallisation}$ : gleich dem Betrag der Fläche 7 in J/g bei der Kaltkristallisation ist
A:der Anteil kristalliner Bereich im Filtermedium ist. Der Faktor A ist ohne Einheit.

Erfindungsgemäße Filtermedium haben einen gemäß vorstehend ermittelten Daten und Formel errechneten A-Faktor von kleiner 0,5, gleichbedeutend weniger als 50% kristalline Bereiche im Polymer bzw. dem daraus hergestellten Filtermedium.

Um nun den Anteil an kristallinen Bereichen in einem erfindungsgemäßen Filtermedium zu beeinflussen gibt es eine Reihe von Möglichkeiten. Beispielsweise ist Tempern, Erhöhung der Spinntemperatur oder Nukleierung möglich. Darüber hinaus ist es eine einfache und effektive Möglichkeit, die Kristallinität durch die Art und Geschwindigkeit der Abkühlung der Polymerschmelze nach deren Austritt aus der Spinndüse einzustellen.

Je schneller die aus der Spinndüse ausgetretene Schmelze auf Temperaturen unterhalb der Glastemperatur des eingesetzten Polymers abgekühlt wird, umso schneller wird die Beweglichkeit der Polymerketten eingeschränkt und somit die Bildung kristalliner Bereiche verhindert.

Je geringer der Anteil kristalliner Bereiche ist, desto kleiner ist auch die Bestrebung eines flächigen Vlieses nach einer Verformung die ursprüngliche Form wieder einzunehmen. Wie bereits erwähnt, wird dieses Verhalten über den Knittererholungswinkel erfasst.

Prinzipiell können alle Thermoplaste, welche in der Lage sind, kristalline Bereiche auszubilden, gemäß den vorstehenden Ausführungen zum Erhalt eines erfindungsgemäßen Filtermediums verwendet werden. Dies umfasst beispielsweise, ohne darauf beschränkt zu sein, Polyethylenterephthalat, Polybutylenterephthalat oder Polystyrol. Als besonders geeignet erwiesen sich Polymilchsäure. Bei diesem Polymer ist es sehr einfach, einen geringen Anteil an kristallinen Bereichen einzustellen. In der Folge sind daraus nach einem Meltblown-Verfahren hergestellte Filtermedien sehr gut plissierbar.

Die Tabelle 1 soll dies nochmals verdeutlichen.

Die in der Tabelle 1 gezeigten Beispiele für erfindungsgemäße Filtermedien A bis C, sowie das dem Stand der Technik entsprechende Medium D wurden nach einem Meltblown-Verfahren auf einer handelsüblichen Anlage hergestellt. Die prinzipiellen Gegebenheiten des Meltblownverfahrens können dem Buch "Vliesstoffe", VCH-Verlag, erschienen im Jahr 2000 entnommen werden.

Für die Herstellung der Medien A bis D wurde ein Polymergranulat aus Polymilchsäure mit dem Handelsnamen Nature Works 6252D, erhältlich von Fa Nature Works eingesetzt. Neben der guten Verarbeitbarkeit ist hier auch noch die biologische Abbaubarkeit gegeben, was sich in der weiteren Verwendung als ökologischer Vorteil gegenüber den vorgenannten konventionellen Polymeren erweist.

Beim klassischen Meltblown-Verfahren wird die austretende Polymerschmelze mittels heißer Luft zunächst verzogen und dann mittels Luft oder Wasser abgekühlt. Dabei werden für das erfindungsgemäße Filtermedium Gewichtsbereiche von 40 bis 300 g/m$^2$, bevorzugt von 60 bis 150 g/m$^2$, ermittelt nach EDANA 40.3-90, angestrebt, die Dicken liegen vorzugsweise im Bereich von 0,3 bis 2,5mm, ermittelt nach EDANA 30.5-99 mit 0,5kPa Vorlast.

Für die in Tabelle 1 genannten Beispiele wurde ein Flächengewicht von 125 g/m$^2$ angestrebt.

Das Filtermedium D entspricht dabei einer Verfahrensweise nach dem Stand der Technik, d.h. die zum Abkühlen der Polymerschmelze eingesetzten Medien Luft und Wasser hatten dabei Raumtemperatur.

Bei den erfindungsgemäß ausgeführten Medien A bis C wurde die Abkühlung forciert, indem die eingesetzte Luft auf eine Temperatur von 10°C konditioniert und das eingesetzte Wasser ebenfalls auf eine Temperatur von 8°C abgekühlt wurde.

Zusätzlich wurden bei der Herstellung des Mediums A Wasser und Luftkühlung kombiniert, sodass eine äußerst rasche Abkühlung die Folge war.

Wie man der Tabelle 1 deutlich entnehmen kann, ist der Anteil kristalliner Bereich im Polymer umso geringer, je rascher die Abkühlung der Schmelze nach dem Austritt aus der Spinndüse erfolgt.

Der Wärmeübergang vom Kühlmedium auf die Polymerschmelze ist dabei von Bedeutung. Betrachtet man das Medium B, bei welchem mit gekühlter Luft gearbeitet wird, im Vergleich zum Medium C, welches mit gekühltem Wasser behandelt wurde, so zeigt sich, dass bei Verwendung von gekühltem Wasser die Bildung von kristallinen Bereichen innerhalb des Medium besser unterdrückt wird. Medium B hat einen Anteil kristalliner Bereiche von 0,49 wohingegen Medium C mit 0,26 einen deutlich geringeren Anteil aufweist. Entsprechend ist auch der Knittererholungswinkel von Medium C mit 28° geringer im Vergleich zu Medium B mit 74°.

Die Kombination der beiden Kühlmedien Luft und Wasser, jeweils gekühlt, hat sich als effektivste Möglichkeit erwiesen, wie die Ergebnisse für das Medium A zeigen. Der Knittererholungswinkel liegt mit 9° auf sehr geringem Niveau, was in dem durch die Kühlung gewährleisteten äußerst geringen Anteil an kristallinen Bereichen von 0,05 begründet ist.

Neben der Verarbeitung von einheitlich zusammengesetzten Polymeren sind auch Mischungen von unterschiedlichen Polymeren für die Herstellung der erfindungsgemäßen Filtermedien verwendbar. Mischungen kommen dann zum Einsatz, wenn beispielsweise die Temperaturstabilität eines Filtermediums erhöht werden soll. Hier können einem an sich für den späteren Einsatzbereich ungeeignetem Polymer thermisch stabilere Polymere beigemischt werden, sodass dadurch die Stabilität des gesamten Mediums dem Anwendungsbereich angepasst wird. Der Anteil einer zweiten, thermisch stabileren Komponente liegt im Bereich bis 50% des Filtermediums. Die unterschiedlichen Polymere werden dabei homogen miteinander vermischt und so dem Extruder zugeführt.

Je geringer der Anteil kristalliner Bereiche, um so geringer ist auch der Knittererholungswinkel, was bedeutet, dass die Formstabilität eines derartig ausgeführten, erfindungsgemäßen Filtermedium auch bei einer schnellen Verformung, wie sie beispielsweise auf eine Messerfaltanlage oder einer Rotationsfaltanlage gegeben ist, gegenüber dem Stand der Technik deutlich verbessert ist.

Wird eine Faltanlage mit einem erfindungsgemäß ausgeführten Filtermedium entsprechend dem Medium A betrieben, kann der zur Fixierung notwendige Schritt der Vorerwärmung entfallen. Dadurch ist es möglich, bei einer Faltenhöhe von 40mm den Durchsatz um bis zu 23% zu steigern, sodass mit dem erfindungsgemäßen Filtermedium A eine Geschwindigkeit von 312 Falten / Minute anstatt der bisher Anzahl von 254 Falten / Minute möglich ist.

Durch die bessere Faltenstabilität ergeben sich im Vergleich zum Stand der Technik weitere Vorteile:

Durch die höhere Stabilität der Falten auch im Abstand zueinander wird die Gefahr eines Kollapses eines plissierten Filters verringert. Dadurch ist es auch möglich die Anzahl von Falten pro cm in einer Filterkassette wie beispielsweise in einer sogenannten Minipleat-Einrichtung notwendig, zu erhöhen, sodass eine Kassette gleicher Abmaße eine bis zu 20% höhere Faltenanzahl und dadurch eine deutlich erhöhte Filterfläche aufweist. In der Folge erhöht sich die Standzeit des Filters ebenfalls beträchtlich.

Derartige, erfindungsgemäße Filter können in einer Reihe von Anwendungen eingesetzt werden. Beispielsweise können erfindungsgemäß ausgeführte Filter in plissierten Filterkassetten bei der automobilen Zuluftfiltration Einsatz finden. Auch der Einsatz zur Filtration von Kraftstoffen oder Ölen ist möglich. Generell finden derartige erfindungsgemäß ausgeführte Medien aber auch in sogenannten HVAC- (=Heating Ventilation and Air Conditioning) Anlagen Anwendung.

Tabelle 1:

| Parameter | Filtermedium A erfindungsgemäß | Filtermedium B erfindungsgemäß | Filtermedium C erfindungsgemäß | Filtermedium D Stand der Technik |
|---|---|---|---|---|
| Zusammensetzung | 100% PLA | 100% PLA | 100% PLA | 100%PLA |
| Herstellart | Meltblown | Meltblown | Meltblown | Meltblown |
| Spinntemperatur (°C) | 245 | 245 | 245 | 245 |
| Flächengewicht (g/m$^2$) | 123 | 127 | 126 | 128 |
| Dicke (mm) | 0,86 | 0,84 | 0,86 | 0,86 |
| Abkühlungsmedium und dessen Temperatur | Gekühlte Luft (10°C) und gekühltes Wasser (8°C) | Gekühlte Luft (10°C) | Gekühltes Wasser (8°C) | Luft (20°C) und Wasser (20°C) |
| Knittererholungswinkel (°) | 9 | 74 | 28 | 108 |
| Temperatur Beginn Kaltkristallisation $T_{ic}$ (°C) | 101,0 | 110,8 | 105,4 | 110,8 |
| Temperatur Ende Kaltkristallisation $T_{fc}$ (°C) | 124,7 | 118,3 | 122,7 | 119,5 |
| Fläche Rekristallisation (J/g) | 53,3 | 33,2 | 44,9 | 13,2 |
| Temperatur Schmelzbeginn $T_{im}$ (°C) | 161,6 | 162,3 | 162,0 | 163,5 |
| Temperatur Schmelzende $T_{fm}$ (°C) | 183,2 | 181,9 | 179,5 | 180,6 |
| Fläche Schmelzen in (J/g) | 56,9 | 65,3 | 60,3 | 75,3 |
| Anteil kristalliner Bereiche A | 0,05 | 0,49 | 0,26 | 0,83 |

Bezugszeichenliste:

1 = Messkurve
2 = Basislinie
3 = Schmelzpunkt
4 = Fläche des Schmelzbereiches $F_{Schmelzen}$
5 = Temperatur bei Beginn des Schmelzens $T_{im}$
6 = Temperatur am Ende des Schmelzens $T_{fm}$
7 = Fläche der Kaltkristallisation $F_{Kaltkristallisation}$

8 = Temperatur bei Beginn der Kaltkristallisation $T_{ic}$
9 = Temperatur am Ende der Kaltkristallisation $T_{fc}$

**Patentansprüche**

1. Plissierter Filter, umfassend ein Filtermedium aus einem thermoplastischen Extrusionsvliesstoff
   **dadurch gekennzeichnet, dass**

   - das die den Extrusionsvllesstoff bildenden Fasern und/oder Filamente aus thermoplastischem Polymer oder Polymermischungen bestehen und
   - die die Filamente und /oder Fasern bildenden Polymere oder Polymermischungen einen Anteil an kristallinen Bereichen von kleiner 50% aufweisen.

2. Plissierter Filter gemäß Anspruch 1
   **dadurch gekennzeichnet, dass**

   - die die Filamente und /oder Fasern bildenden Polymere oder Polymermischungen einen Anteil an kristallinen Bereichen von kleiner 25% aufweisen.

3. Plissierter Filter gemäß Anspruch 1
   **dadurch gekennzeichnet, dass**

   - die die Filamente und /oder Fasern bildenden Polymere oder Polymermischungen einen Anteil an kristallinen Bereichen von kleiner 15% aufweisen.

4. Plissierter Filter gemäß Anspruch 1
   **dadurch gekennzeichnet, dass**

   - die Filamente und /oder Fasern des Filtermediums aus einem Polyester gebildet werden

5. Plissierter Filter gemäß Anspruch 1
   **dadurch gekennzeichnet, dass**

   - die Filamente und /oder Fasern des Filtermediums aus einem Polyolefin gebildet werden

6. Plissierter Filter gemäß Anspruch 1
   **dadurch gekennzeichnet, dass**

   - die Filamente und /oder Fasern des Filtermediums aus einem biologisch abbaubaren Polymer gebildet werden.

7. Plissierter Filter gemäß Anspruch 1
   **dadurch gekennzeichnet, dass**

   - die Filamente und /oder Fasern des Filtermediums aus thermoplastischem Polylactid-Polymer gebildet werden.

8. Plissierter Filter gemäß Anspruch 1
   **dadurch gekennzeichnet, dass**

   - die Filamente und /oder Fasern des Filtermediums aus thermoplastischem Polystyrol-Polymer gebildet werden.

9. Plissierter Filter nach einem der vorstehenden Ansprüche
   **dadurch gekennzeichnet, dass**

   - die Filamente und /oder Fasern des Filtermediums aus Mischungen thermoplastischer Polymere gebildet werden.

10. Plissierter Filter nach einem der vorstehenden Ansprüche

**dadurch gekennzeichnet, dass**

- die Filamente und /oder Fasern des Filtermediums aus Mischungen biologisch abbaubarer Polymere mit nicht biologisch abbaubaren Polymeren gebildet werden.

11. Plissierter Filter nach einem der vorstehenden Ansprüche
**dadurch gekennzeichnet, dass**

- der Knittererholungswinkel nach 1 h kleiner 90° liegt.

12. Plissierter Filter nach einem der vorstehenden Ansprüche
**dadurch gekennzeichnet, dass**

- der Knittererholungswinkel nach 1 h kleiner 45° liegt.

13. Plissierter Filter nach einem der vorstehenden Ansprüche
**dadurch gekennzeichnet, dass**

- der Knittererholungswinkel nach 1 h kleiner 20° liegt.

14. Plissierter Luftfilter für die Verwendung in einem Kraftfahrzeug
**dadurch gekennzeichnet, dass**

- der Luftfilter aus einem Filter gemäß einem der Ansprüche 1 bis 13 besteht

15. Plissierter Luftfilter für die Verwendung im HVAC-Bereich
**dadurch gekennzeichnet, dass**

- der Luftfilter aus einem Filter gemäß einem der Ansprüche 1 bis 13 besteht


**Claims**

1. Pleated filter comprising a filter medium made from a thermoplastic extrusion non-woven fabric
   **characterised in that**

   - the fibres and/or filaments which form the extrusion non-woven fabric consist of a thermoplastic polymer or polymer blends, and
   - the polymers or polymer blends which form the filaments and/or fibres have a proportion of crystalline regions of less than 50%.

2. Pleated filter according to claim 1
   **characterised in that**

   - the polymers or polymer blends which form the filaments and/or fibres have a proportion of crystalline regions of less than 25%.

3. Pleated filter according to claim 1
   **characterised in that**

   - the polymers or polymer blends which form the filaments and/or fibres have a proportion of crystalline regions of less than 15%.

4. Pleated filter according to claim 1
   **characterised in that**

   - the filaments and/or fibres of the filter medium are formed from a polyester.

5.  Pleated filter according to claim 1
    **characterised in that**

    - the filaments and/or fibres of the filter medium are formed from a polyolefin.

6.  Pleated filter according to claim 1
    **characterised in that**

    - the filaments and/or fibres of the filter medium are formed from a biodegradable polymer.

7.  Pleated filter according to claim 1
    **characterised in that**

    - the filaments and/or fibres of the filter medium are formed from a thermoplastic polylactide polymer.

8.  Pleated filter according to claim 1
    **characterised in that**

    - the filaments and/or fibres of the filter medium are formed from a thermoplastic polystyrene polymer.

9.  Pleated filter according to any of the preceding claims
    **characterised in that**

    - the filaments and/or fibres of the filter medium are formed from blends of thermoplastic polymers.

10. Pleated filter according to any of the preceding claims
    **characterised in that**

    - the filaments and/or fibres of the filter medium are formed from blends of biodegradable polymers with non-biodegradable polymers.

11. Pleated filter according to any of the preceding claims
    **characterised in that**

    - the crease recovery angle is less than 90° after 1 h.

12. Pleated filter according to any of the preceding claims
    **characterised in that**

    - the crease recovery angle is less than 45° after 1 h.

13. Pleated filter according to any of the preceding claims
    **characterised in that**

    - the crease recovery angle is less than 20° after 1 h.

14. Pleated air filter for use in a vehicle
    **characterised in that**

    - the air filter consists of a filter medium according to any of claims 1 to 13.

15. Pleated air filter for use in the field of HVAC
    **characterised in that**

    - the air filter consists of a filter medium according to any of claims 1 to 13.

**Revendications**

1. Filtre plissé comprenant un média filtrant en non-tissé thermoplastique extrudé,
   **caractérisé en ce que**

   - les fibres et/ou les filaments formant le non-tissé extrudé sont en polymère thermosplastique ou en mélanges de polymères, et que
   - les polymères ou mélanges de polymères formant les filaments et/ou les fibres présentent une part de fractions cristallines inférieure à 50%.

2. Filtre plissé selon la revendication 1,
   **caractérisé en ce que**

   - les polymères ou mélanges de polymères formant les filaments et/ou les fibres présentent une part de fractions cristallines inférieure à 25 %.

3. Filtre plissé selon la revendication 1,
   **caractérisé en ce que**

   - les polymères ou mélanges de polymères formant les filaments et/ou les fibres présentent une part de fractions cristallines inférieure à 15%.

4. Filtre plissé selon la revendication 1,
   **caractérisé en ce que**

   - les filaments et/ou les fibres du média filtrant sont formés à partir d'un polyester.

5. Filtre plissé selon la revendication 1,
   **caractérisé en ce que**

   - les filaments et/ou les fibres du média filtrant sont formés à partir d'une polyoléfine.

6. Filtre plissé selon la revendication 1,
   **caractérisé en ce que**

   - les filaments et/ou les fibres du média filtrant sont formés à partir d'un polymère biodégradable.

7. Filtre plissé selon la revendication 1,
   **caractérisé en ce que**

   - les filaments et/ou les fibres du média filtrant sont formés à partir d'un polymère polyactique thermoplastique.

8. Filtre plissé selon la revendication 1,
   **caractérisé en ce que**

   - les filaments et/ou les fibres du média filtrant sont formés à partir d'un polymère de polystyrène thermoplastique.

9. Filtre plissé selon l'une des revendications précédentes,
   **caractérisé en ce que**

   - les filaments et/ou les fibres du média filtrant sont formés à partir de mélanges de polymères thermoplastiques.

10. Filtre plissé selon l'une des revendications précédentes,
    **caractérisé en ce que**

    - les filaments et/ou les fibres du média filtrant sont formés à partir de mélanges de polymères biodégradables et de polymères non biodégradables.

**11.** Filtre plissé selon l'une des revendications précédentes, **caractérisé en ce que**

- l'angle de redressement après pliure est inférieur à 90° au bout d'une heure.

**12.** Filtre plissé selon l'une des revendications précédentes, **caractérisé en ce que**

- l'angle de redressement après pliure est inférieur à 45° au bout d'une heure.

**13.** Filtre plissé selon l'une des revendications précédentes, **caractérisé en ce que**

- l'angle de redressement après pliure est inférieur à 20° au bout d'une heure.

**14.** Filtre à air plissé destiné à l'emploi dans un véhicule automobile **caractérisé en ce que**

- le filtre à air se compose d'un média filtrant selon l'une des revendications 1 à 13.

**15.** Filtre à air plissé destiné à l'emploi dans le domaine CVC **caractérisé en ce que**

- le filtre à air se compose d'un média filtrant selon l'une des revendications 1 à 13.

Figur 1:

Figur 2:

Wärmestrom
(mW/mg)

Temperatur (°C)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9916532 A1